# EUROPEAN PATENT APPLICATION

(11) **EP 2 394 938 A1**
(43) Date of publication of application: **14.12.2011**
(21) Application number: 10738545.2
(22) Date of filing: 03.02.2010
(51) Int. Cl.: B65G 59/10, B65G 59/06

(54) **DRUG TRAY SUPPLY DEVICE**

(30) Priority: 05.02.2009 JP 2009025115; 26.01.2010 JP 2010014103
(71) Applicant: Yuyama Mfg. Co., Ltd., Toyonaka-shi Osaka 561-0841 (JP)
(72) Inventor: TANAKA, Akifumi, Toyonaka-shi Osaka 561-0841 (JP)
(74) Representative: Price, Christopher
(86) International application number: PCT/JP2010/051500
(87) International publication number: WO 2010/090214

(57) **Abstract**

Disclosed is a medicine tray supply device including: a preparation cart (37) for supporting a group of medicine trays comprising vertically stacked medicine trays (18); cart positioning means for positioning the preparation cart (37) in a standby position; cart transferring means for transferring the preparation cart (37) positioned in the standby position to an input position; tray lifting means for holding the group of medicine trays from the preparation cart (37) transferred to the input position and moving the group of medicine trays to a supply preparation position, and supplying a lowermost medicine tray (18) from the group of medicine trays in the supply preparation position to a tray conveying line (3); and control means (7) transferring the preparation cart (37) from the input position to the standby position by the cart transferring means after the group of medicine trays is lifted to the supply preparation position by the tray lifting means before the medicine tray (18) is supplied to the tray conveying line (3).

## Description

### Field of the Invention

The present invention relates to a medicine tray supply device for automatically supplying medicine trays containing medicines to a tray conveying line.

### Background of the Invention

There is known in the art an automatic supply device for package containers, which is capable of automatically supplying containers by removing a lowermost container in stacked containers one after the other (*see, e. g*., Patent Document 1).

Patent Document 1 describes an automated removal of package containers, but is silent as to construction for setting the containers. Medicine trays used to receive medicines and convey the medicines to a ward are relatively heavy. Thus, it is very difficult to set medicine trays in the aforementioned automatic supply device as they are stacked up. Further, although the medicine trays may be set, a sufficient number of the medicine trays cannot be stacked up. By way of example, in large hospitals, a process of dispensing ampoules for the entire wards is performed from the night before. In such an example, since the number of the trays in one automatic supply device is insufficient, it is required to arrange a plurality of devices (three or four devices) side by side. This incurs costs associated with introducing relevant equipments and increases occupational spaces.
Patent Document 1: Japanese Laid-Open Patent Application No. Heisei 06-183568

### Summary of the Invention

It is an object of the present invention to provide a tray supply device, which can simply set a group of medicine trays comprising stacked medicine trays and set the next group of medicine trays in advance to automatically supply it.

As measures for achieving the foregoing object, the present invention provides a medicine tray supply device for supplying medicine trays to a tray conveying line. The medicine tray supply device comprises: a preparation cart for supporting a group of medicine trays comprising vertically stacked medicine trays; cart positioning means for positioning the preparation cart in a standby position; cart transferring means for transferring the preparation cart positioned in the standby position to an input position and for transferring the preparation cart positioned in the input position to a discharge position; tray supply means for holding the group of medicine trays from the preparation cart transferred to the input position and moving the group of medicine trays to a supply preparation position, and supplying a lowermost medicine tray from the group of medicine trays in the supply preparation position to the tray conveying line; and control means for transferring the preparation cart from the input position to the standby position by the cart transferring means.

According to such construction, if the preparation cart is set in the standby position as the group of medicine trays comprising a plurality of stacked medicine trays are placed on the preparation cart, then the preparation cart is positioned by the cart positioning means and can be automatically transferred to the input position by the cart transferring means. Further, if the preparation cart is transferred to the input position, then the group of medicine trays can be moved upwardly to be positioned in the supply preparation position by the tray lifting means, and the preparation cart can be transferred to the discharge position by the cart transferring means. Accordingly, operators can begin the supply of the medicine trays only by placing the stacked medicine trays on the preparation cart and then setting them in the standby position.

The control means may supply the medicine tray to the tray conveying line by the tray supply means after transferring the preparation cart from the input position to the standby position by the cart transferring means.

The drive control means may transfer the preparation cart positioned in the standby position to the input position by the cart transferring means after all of the medicine trays held in the supply preparation position are supplied to the tray conveying line.

According to such construction, after the supply of the medicine trays starts, the next preparation can be made only by further placing the stacked medicine trays on the preparation cart and then setting the preparation cart in the standby position. That is, when there is no medicine tray in the supply preparation position, the group of medicine trays placed on the preparation cart is automatically inputted and positioned in the supply preparation position and only the preparation cart can be transferred to the discharge position and the medicine trays can be supplied to the tray conveying line.

The preparation cart may include engaged portions in at least two places. The cart positioning means may include an engaging portion engaging and disengaging from the two engaged portions of the preparation cart. The cart transferring means may reciprocate the preparation cart between the standby position and the input position by moving the engaging portion.

Preferably, the positioning means maintains engagement of the engaged portion caused by an engaging portion after the cart transferring means moves the preparation cart from the input position to the discharge position beyond the standby position.

According to such construction, it is possible to prevent an empty cart from separating from the cart transferring means to move arbitrarily after the group of medicine trays is inputted.

Preferably, the positioning means releases the engagement of the engaged portion caused by the engaging portion when the preparation cart is positioned in the standby position.

Preferably, the tray lifting means includes a tray holding portion that is lifted and lowered along lifting shafts disposed at both sides along an input direction of the preparation cart. The tray holding portion includes a connecting shaft having pinion gears engaging each of the lifting shafts at both ends thereof. Rack gears engaging the pinion gears respectively are disposed along the lifting shaft.

According to such construction, the tray holding portion can be lifted along the lifting shaft while maintaining mesh between the pinion gears and the rack gears. Thus, wobbling does not occur and it is possible to stably lift the supported trays. Further, according to such construction, the support state of the trays can be stabilized by disposing a supporting mechanism in a lower portion only. Accordingly, even when a large number of trays are stacked, the trays can be freely supplied frequently from the surroundings.

Preferably, the medicine tray supply device further comprises tray detecting means for detecting that the group of medicine trays placed on the preparation cart positioned in the standby position comprises the medicine trays stacked beyond a maximum stack number permitting lifting and lowering by the tray lifting means. The control means notifies an error when the tray detecting means detects that the medicine trays are stacked beyond the maximum stack number.

According to such construction, when the medicine trays are stacked more than necessary, the medicine trays can be safely used without falling down or causing damage to the tray lifting means.

Preferably, the medicine tray includes partition plates to partition an inside thereof into a plurality of receiving sections. The medicine tray supply device further comprises an error detecting means for detecting an error of medicine tray as to whether the partition plates are set in a predetermined position, or as to whether the medicine tray is positioned in a normal position.

According to such construction, the medicine tray can be conveyed to the next process while the partitioned position of the medicine tray is automatically detected.

Preferably, the error detecting means includes a bracket rotatably provided around a drive shaft between a detection position and a non-detection position. The error detecting means further includes biasing means for biasing the bracket toward the detection position and rotation preventing means for preventing the bracket biased by the biasing means from rotating beyond the detection position.

According to such construction, the error detecting means can be manufactured simply and at low cost. Further, there is no damage problem during error detection.

Preferably, the medicine tray supply device further comprises notification means for notifying a notification purporting that the error of medicine tray is detected when the error detecting means detects the error of medicine tray.

According to such construction, operators can be promptly aware that the medicine tray has troubles.

Preferably, when the error detecting means detects the error of medicine tray, the control means does not perform a subsequent process for the medicine tray.

According to such construction, it is possible to prevent the medicines from being supplied to the medicine tray with error and thereafter being erroneously transferred to a patient.

According to the present invention, the preparation cart with a plurality of trays stacked thereon can be prepared in the standby position in advance. When all of the medicine trays in the supply preparation position are conveyed, the preparation cart can be automatically inputted to the input position and the next group of medicine trays can be set in the supply preparation position. Further, when the group of medicine trays is set in the supply preparation position, the preparation cart can be automatically discharged to the standby position. Accordingly, the efforts in preparing the medicine trays can be remarkably reduced, thus enhancing the workability.

### Brief Description of the Drawings

FIG. 1 is a schematic view showing an entire medicine supply system according to one embodiment.
FIG. 2 (a) is a schematic front view of a medicine tray supply device, while FIG. 2(b) is a plan view thereof.
FIG. 3 is a side view of FIG. 2(a).
FIG. 4 is a bottom plan view showing a bottom portion of the device shown in FIG. 2(a).
FIG. 5 shows an operation of the cart transferring member shown in FIG. 4.
FIG. 6 shows an operation of an arm portion of the cart transferring member shown in FIG. 5.
FIG. 7(a) is a perspective view showing a partition plate detecting part shown in FIG. 2, FIG. 7(b) is a plan view thereof and FIG. 7(c) is a side view thereof.
FIG. 8 shows an operation of the partition plate detecting part shown in FIG. 6.
FIG. 9(a) is a plan view showing a tray lifting member shown in FIG. 2, while FIG. 9(b) is a side view thereof.
FIG. 10 is a block diagram showing the embodiment.
FIG. 11 is a flow chart showing a medicine tray reservation process.
FIG. 12 is a flow chart showing a medicine tray supply process.
FIG. 13 is a flow chart showing a medicine tray dispensing process shown in FIG. 12.
FIG. 14 is a flow chart showing a partition plate checking process shown in FIG. 12.
FIG. 15 is a flow chart showing a cart input/discharge process shown in FIG. 12.
FIG. 16 is a schematic perspective view showing a medicine tray supply device according to another embodiment.

### Details of the Invention

Hereinafter, embodiments of the present invention will be described with reference to the accompanying drawings. Further, where necessary, the terms (e.g., "upper," "lower," "side," "end," etc.) are used herein for indicating a particular direction or position. However, those terms used herein are to facilitate the understanding of the present invention with reference to the drawings and are not intended to limit the scope of the present invention on their meanings.

### (1. CONSTRUCTION)

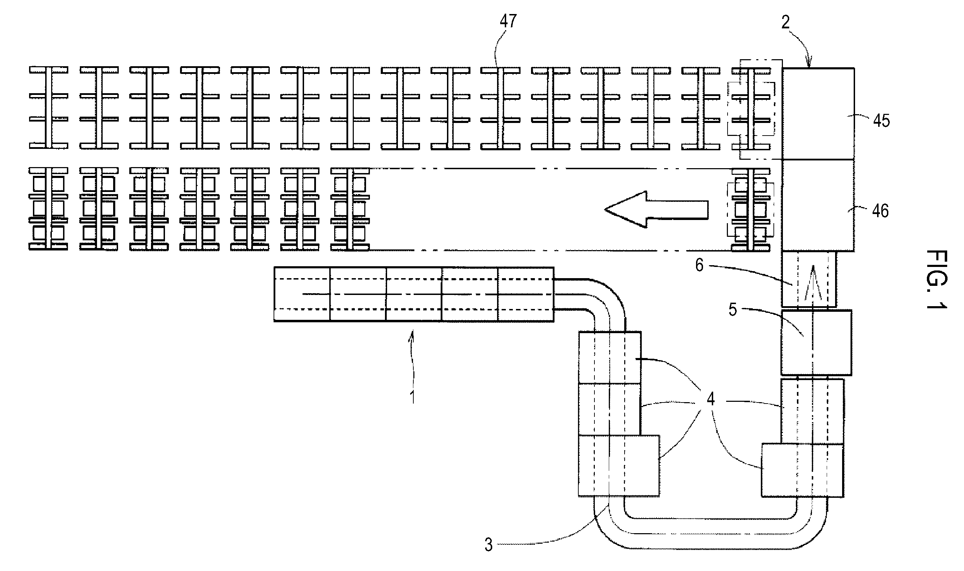

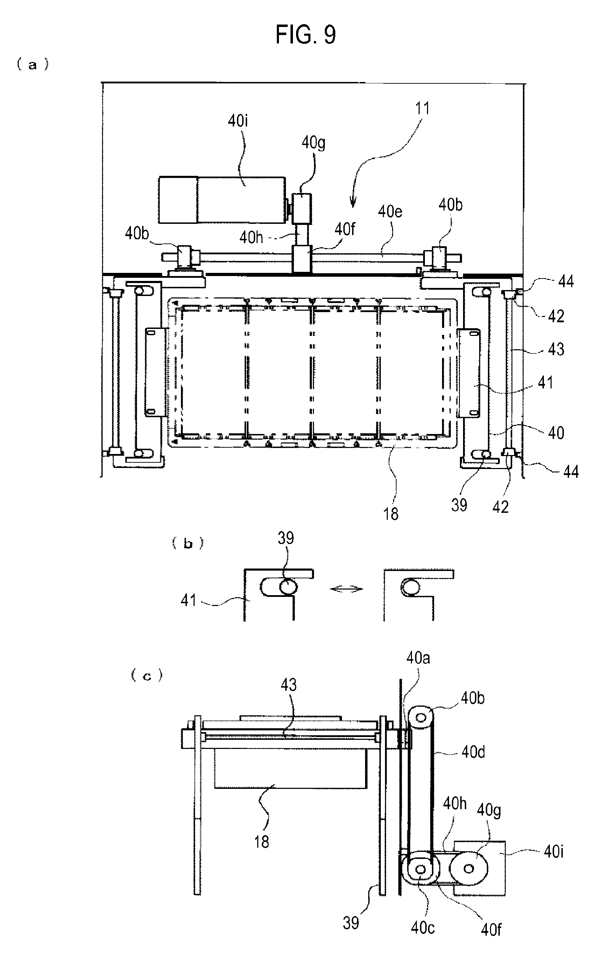

FIG. 1 shows a medicine supply system according to the embodiment, which comprises: a plurality of medicine dispensing devices 4; and a card rewriting device and a stack lifter 6 disposed on the way of a tray conveying line 3 connecting a medicine tray supply device 1 and a medicine tray discharge device 2. Further, as shown in FIG. 9, a control device 7 is configured to control these members.

### (1-1. MEDICINE TRAY SUPPLY DEVICE 1)

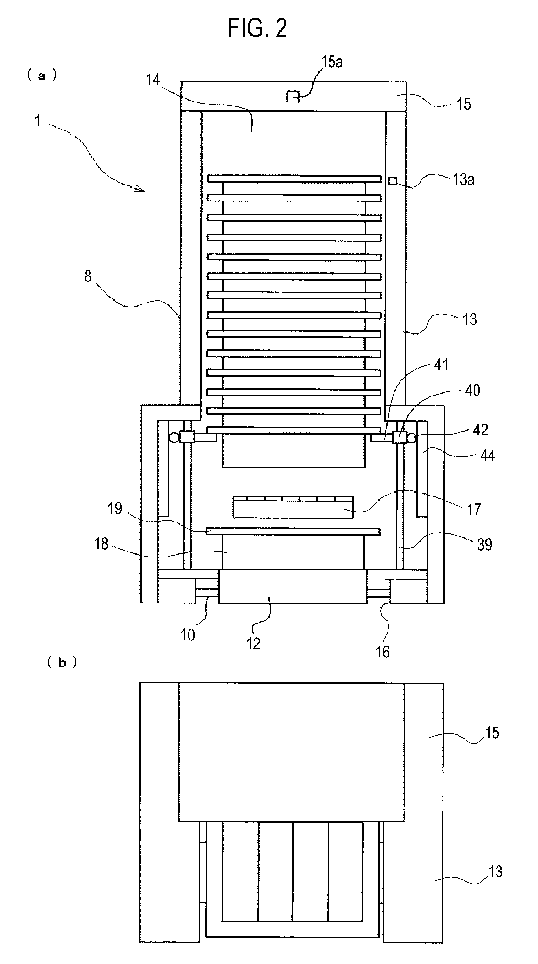

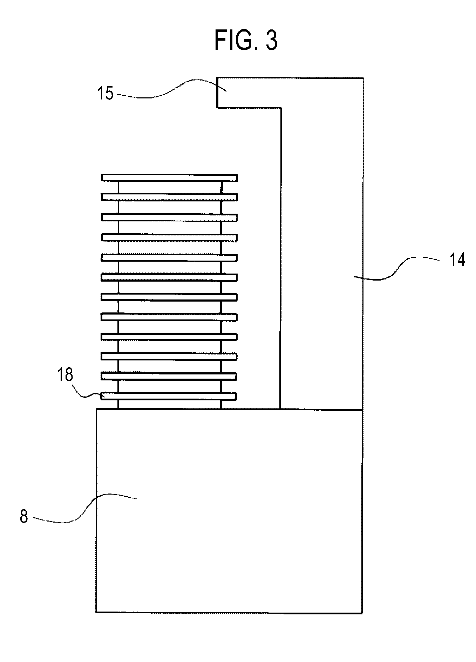

The medicine tray supply device 1, as shown in FIGS. 2 and 3, includes a device body 8 provided with a tray conveying member 9, a cart transferring member 10 and a tray lifting member 11.

### (1-1-1. DEVICE BODY 8)

The device body 8 includes the following: a bottom portion 12; side portions 13 protruding forward at both sides thereof; a back portion 14; and a top plate portion 15 protruding more forward than the side portion 13 from an upper end of the back portion 14.

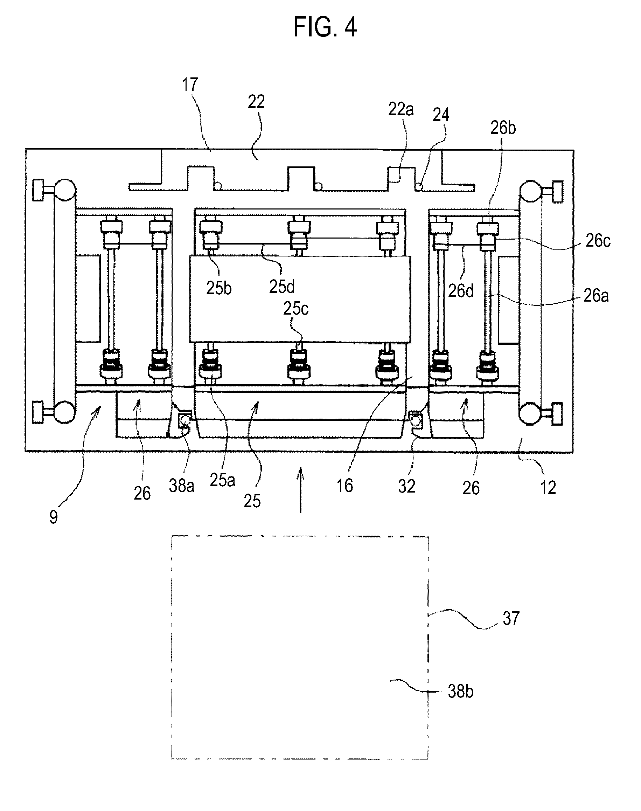

In the bottom portion 12, as shown in FIG. 4, communication grooves 16 are formed at both sides from a front toward a back, respectively. These communication grooves 16 are for avoiding interference with a leg portion 38 when a preparation cart 37, which will be described below, is transferred between a standby position and an input position. Further, an open portion of the communication groove 16 becomes gradually wider in its cross section toward the front side. This allows the leg portion 38 of a preparation cart 37(this will be described below) to be easily inserted to the communication groove 16.

As shown in FIG. 2, a partition plate detecting part 17 is provided below the back portion 14. The partition plate detection part 17 detects whether partition plates 20 attached in a medicine tray 18 conveyed on the tray conveying line 3 are appropriately positioned.

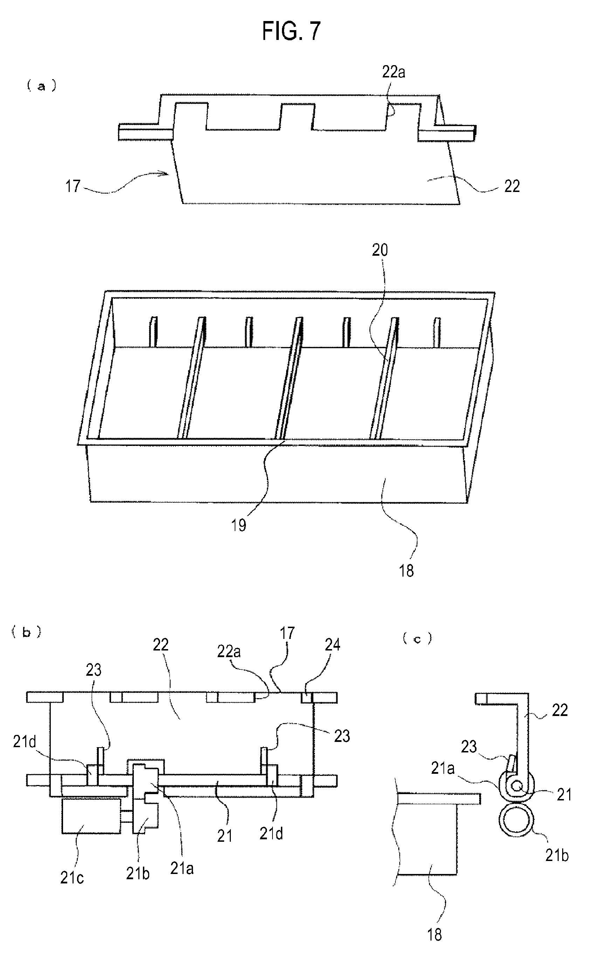

As shown in FIG. 7, the medicine tray 18 is a plastic container having a shape of a rectangular bucket with a bottom when viewed from above. The medicine tray is formed at an upper opening with a flange portion 19. Further, the medicine tray has grooves at both sides thereof. The medicine tray is configured to be partitioned into a plurality of receiving sections according to dosage time by attaching the partition plates 20 in the medicine tray.

The partition plate detecting part 17, as shown in FIG 7(b), comprises a bracket 22 pivotally provided around a drive shaft 21. The drive shaft 21 receives a drive force of a motor 21c through gears 21a, 21b. The drive shaft 21 and bracket 22 are rotatably connected to each other. The bracket 22 is biased by a spring 21d to abut an abutment plate 23 provided in the drive shaft 21. Accordingly, when the bracket 22 is positioned in an upper position, i.e., in a non-detection position, the bracket 22 is upright maintained by the biasing force of the spring, as shown in FIG. 7(c).

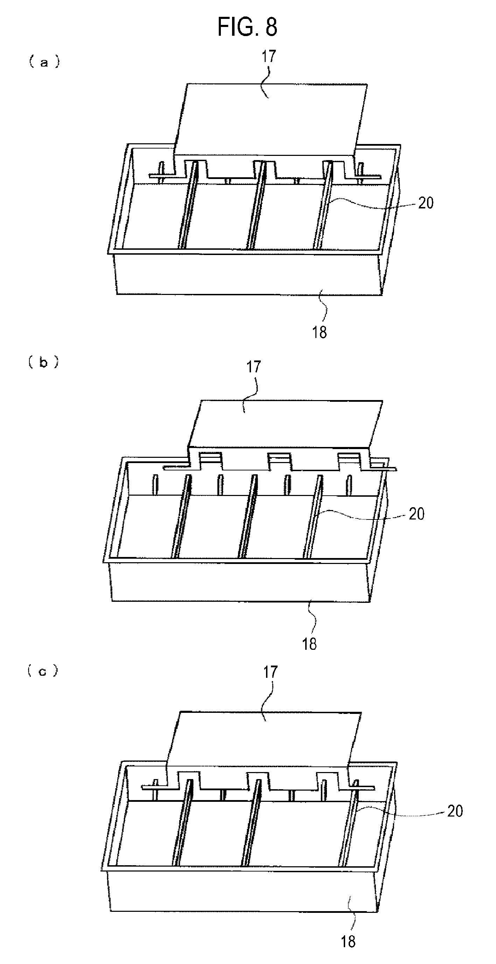

As shown in FIGS. 7(a) and 7(b), the bracket 22 is formed with a plurality of notches 22a at a side edge portion (detecting side edge portion) opposite to the drive shaft 21. The detecting side edge portion is formed in such a length to allow accurate insertion to the medicine tray 18. This enables reliable detection on erroneous mount of the partition plates. Further, each of the notches 22a is formed in a position corresponding to the partition plate 20 of the medicine tray 18. A partition plate detecting sensor 24 (comprising a light emitting element and a light receiving element) is provided in an opposite edge forming a portion of each of the notches 22a (of course, it is possible to use a reflection type sensor). Each of the partition plate detecting sensors 24 can detect the partition plate 20 when the bracket 22 is rotated to a detection position shown in FIG. 8(a), the partition plates 20 are positioned in respective notches 22a, and light from the light emitting element is reflected and received by the light receiving element. As shown in FIG. 8(c), in case the partition plate 20 is positioned in an incorrect position, the side edge portion of the bracket 22 is brought into abutment with the partition plate 20, and thus, the bracket 22 is hindered from being rotated regardless of the rotation of the drive shaft 21, thereby detecting that the partition plate 20 is positioned in a wrong position. Further, in case the partition plates 20 are not positioned in a predetermined position, the corresponding partition plate detecting Sensor 24 goes into a state where the light receiving element cannot receive the light from the light emitting element, thus detecting that the partition plates 20 are not provided in position. Further, as shown in FIG. 8(b), in case the medicine tray 18 itself is not located in position, the side edge portion of the bracket 22 comes into contact with the edge of the opening the medicine tray 18 and is thereby prevented from rotating. Thus, similar to the above, the partition plate detecting sensor 24 goes into a state where the light receiving element cannot receive the light from the light emitting element. Further, the biasing force of the spring 21d is set at a weak level such that the medicine tray cannot be damaged, even when the rotation of the bracket 22 is hindered as shown in FIGS. 8(a) to 8(c).

Openings (not shown) through which the medicine tray 18 can pass are formed in lower portions of the side portions 13, respectively. Further, as shown in FIG. 3, an upper portion of each side portion 13 slightly protrudes from the back portion 14 and thus fully opens the side portions of the medicine trays 18 which are stacked up in the input position. Accordingly, in case the medicine trays 18 lean in the input position, such a situation can be addressed in three directions from the front and the both sides. Further, in case the medicine trays 18 are frequently supplied to the input position, they can be inserted in the three directions likewise and thus set simply. Accordingly, it is possible to provide an environment having superior maintenance workability. Further, a reservation cancel button 13a is provided in a front upper portion of one of the side portions 13. The reservation cancel button 13a has a LED lamp and is configured to be appropriately turned on or turned off. Further, pressing the reservation cancel button 13a when turned on can compulsorily release the positioned state of the preparation cart 37 in the standby position (this will be described below).

The top plate portion 15 forward protrudes in a position where the preparation cart 37 with a maximum stack number of the medicine trays 18 placed thereon can be inputted accurately. Accordingly, when the stack number of the medicine trays 18 exceeds the maximum number, the front face of the top plate portion 15 comes into contact with the medicine tray 18, thereby not permitting a group of stacked medicine trays to be set in a normal position. Further, a tray detecting sensor 15a for detecting the medicine trays 18 is provided in a front central portion of the top plate. The tray detecting sensor 15a detects the medicine trays 18 stacked beyond the maximum number when the preparation cart 37 with the medicine trays 18 stacked thereon is set in the standby position (this will be described below), thereby preventing input from a tray conveying member 9 as described below. Thus, excessive stack of the medicine trays 18 is prevented. Further, the top plate portion 15 becomes a standard, by which the maximum number of the stacked medicine trays 18 can be determined. However, insofar as the tray detecting sensor 15a can detect the medicine trays 18 stacked beyond the maximum number (if the tray detecting sensor 15a can have a wide detection range), there is no need to enlarge protrusion of the top plate portion 15 to such an extent. Further, in some case, the top plate portion 15 is unnecessary.

### (1-1-2. TRAY CONVEYING MEMBER 9)

As shown in FIG. 4, the tray conveying member 9 is provided in the bottom portion 12 of the device body 8. The tray conveying member includes: a first transfer portion 25 located centrally; and second transfer portions 26 located at both sides of the first transfer portion with the communication groove 16 therebetween, that is, positioned in an upstream and a downstream of the tray conveying line 3, respectively. The first transfer portion 25 includes: three rotating shafts disposed side by side at predetermined spacing; a transfer roller 25a and a pulley 25b provided in each rotating shaft; and belts 25d wound between the pulleys 25b of the neighboring rotating shafts 25c respectively. The central rotating shaft 25c is supplied with a drive force of a motor through gears (not shown), thereby rotating the transfer rollers 25a through the belts 25d and pulleys 25b to transfer the medicine trays 18 placed thereon to the downstream. Further, the second transfer portion 26 includes: two rotating shafts 26a disposed at predetermined spacing; transfer rollers 26b provided in ends of the rotating shafts and pulleys 26c provided in the central portion thereof in two positions; and a belt 26d wound between the pulleys 26c of the rotating shafts 26a. One of the rotating shafts 26a is configured to receive a drive force of a motor (not shown). The transfer rollers 26b are rotated by the pulleys 26c and the belt 26d to transfer the medicine tray 18.

### (1-1-3. CART TRANSFERRING MEMBER 10)

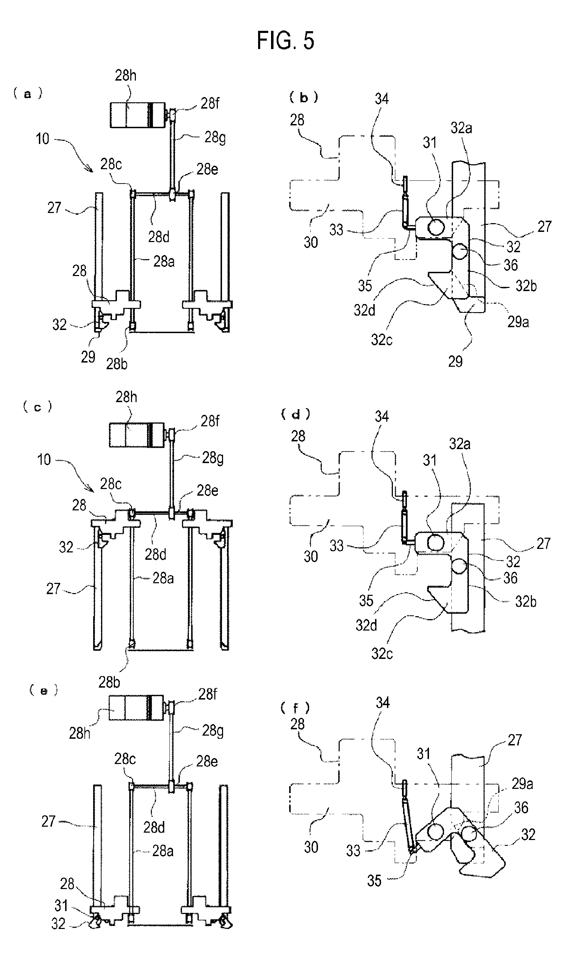

As shown in FIG. 5, the cart transferring member 10 includes slide rails 27 disposed along an inside of each of the side portions 13 and slide arms 28 reciprocating along the slide rail.

As shown in FIG. 5(b), a bulging portion is formed in an end of each slide rail 27 and an inclined surface 29a is formed inward. The inclined surface 29a is used to rotate an arm portion 32 of the slide arm 28, as described below.

The slide rail 27 slidably passes through one end of the slide arm 28, while the opposite end of the slide arm is fixed to the belt 28a. The belt 28a is wound between pulleys 28b, 28c which are provided at the front and rear of the bottom portion 12, respectively. The pulleys 28c located at the rear are connected to each other via a rotating shaft 28d and thus both of them are configured to rotate in synchronization with each other. Pulleys 28e, 28f (28f indicates a drive pulley) are further provided in the midway of the rotating shaft 28d and in the rear thereof (more rear than the back portion 14). A belt 28g is wound between these pulleys 28e, 28f. The drive pulley 28f is provided in a rotating shaft of a motor 28h. As the motor 28h operates normally and reversely, the slide arm 28 reciprocates back and forth along the slide rail 27 through the pulleys 28e, 28f and belt 28g.

Further, the slide arm 28 includes an arm body 30 and an arm portion 32 rotatably provided in the arm body 30 around a spindle 31.

The arm portion 32 includes a first straight section 32a connected to the spindle 31, a second straight section 32b bent at a right angle from the first straight section 32a, and a third straight section 32c bent at a right angle from the second straight section 32b, thus having an approximately C shape as a whole.

The first straight section 32a is connected at one end thereof to a coil spring 33 positioned between the one end and the arm body 30. Specifically, as shown in FIG. 5(b), both ends of the coil spring 33 are connected to a lower end of a first attachment part 34, which is fixed at its upper end to the arm body 30 and then extends downward, and to a left end of a second attachment part 35, which is fixed at its right end to an end of the first straight section of the arm portion 32 and then extends leftward, respectively. Thus, the arm portion 32 is positioned in a closed position shown in FIG. 5(b) while one end thereof is biased upwardly and a portion thereof comes into abutment with an abutment portion (not shown).

The second straight section 32b includes, in the midway portion, a shaft 36 which extends downward perpendicularly to the drawing sheet when viewed from FIG. 5(b). As the slide arm 28 moves forward along the slide rail 27, the shaft 36 is brought into slide contact with the inclined surface 29a formed in the bulging portion 29 of the slide rail 27, thereby rotating the arm portion 32 relative to the arm body 30.

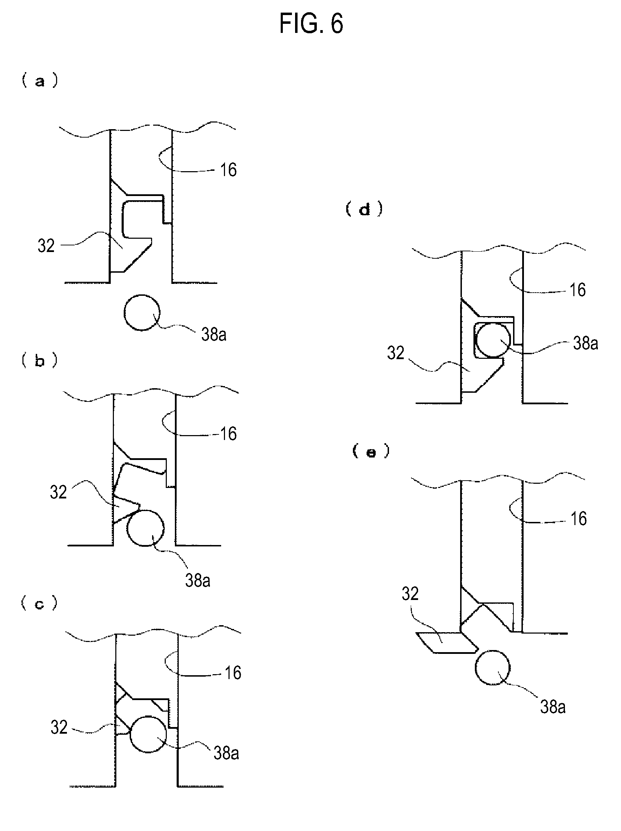

The third straight section 32c, when the arm portion 32 is positioned in the closed position, protrudes to the communication groove 16 of the bottom portion 12 of the device body 8. An inclined surface 32d is formed in a front portion of the third straight section 32c protruding to the communication groove 16. The inclined surface 32d is gradually inclined to the rear as it goes toward a leading end. As shown in FIGS. 6(b) and 6(c), the inclined surface 32d is pressed by the leg portion 38 of the preparation cart 37 thereby rotating the arm portion 32 around the spindle 31 against a biasing force of the coil spring 33. If the insertion of the leg portion 38a of the preparation cart 37 is finished, then the arm portion 32 returns to its original position by the biasing force of the coil spring 33. As a result, as shown in FIG. 6(c), the leg portion 38a is held by the arm portion 32 and cannot be separated therefrom.

The arm portion 32 of the cart transferring member 10 is configured to engage and disengage from the preparation cart 37. While not shown in detail, the preparation cart 37 is formed by integrating a supporter 38b onto an upper side of the four leg portions 38a. A caster (not shown) is provided in each of the leg portions 38a, thereby allowing a free movement on a flat surface. The upper surface of the supporter 38b is configured such that a plurality of medicine trays 18 may be stacked thereon. A diameter of each leg portion 38a is sized such that the leg portion is engaged to and disengaged from the arm portion 32 provided in the communication groove 16 formed in the bottom portion 12 of the device body 8.

### (1-1-4. TRAY LIFTING MEMBER 11)

As shown in FIG. 9, the tray lifting member 11 includes: lifting shafts 39 provided at the front and rear of both the side portions 13 of the device body 8 and extending vertically and tray holding portions 40 provided in the lifting shafts 39 to be lifted and lowered therealong. As shown in FIG. 9(b), a supporting piece 41, which is reciprocated between a support position where the flange portion 19 of the medicine tray 18 can be supported and a release position spaced therefrom. A portion of a leading end of the supporting piece 41 is erected upward to thus support a side edge and a lower surface of the flange portion 19 of the medicine tray 18. Herein, a mechanism for reciprocating the supporting piece 41 is not described in detail. The mechanism has a configuration that a plurality of rollers are provided at a bottom and a reciprocating movement is performed by means of a drive member (*see* WO/2005/105629 regarding the details of the movement mechanism between the supporting position and the release position).

As shown in FIG. 9(c), a connecting shaft 43 with pinion gears 42 integrated at both ends thereof is rotatably provided in each tray holding portion 40. Each pinion gear 42 is in mesh with a rack gear 44 that is formed on an inner surface of the side portion 13 of the device body 8 and extends vertically. Further, the tray holding portion 40 is fixed at both sides thereof to a belt 40d wound between pulleys 40b, 40c through a clamp portion 40a. The lower pulleys 40c are connected to each other via a shaft member 40e and the shaft member 40e is integrated at its center portion with a pulley 40f. A belt 40h is also wound between the pulley 40f and a pulley 40g adjacent thereto. The pulley 40g is rotated normally and reversely by a motor 40i. Thus, as the motor 40i operates normally and reversely, the tray holding portion 40 is lifted and lowered between a lower supply position and an upper supply preparation position through the pulleys 40b, 40c, 40f and belts 40d, 40h. At this time, the pinion gear 42 changes a mesh position relative to the rack gear 44, thereby rendering the lifting and lowering state stable and accurate. Accordingly, although a motor 40h as a driving means is disposed in the rear and belt drive is performed, the tray holding portion 40 can be smoothly lifted and lowered.

### (1-2. TRAY DISCHARGE DEVICE)

As shown in FIG. 1, the tray discharge device comprises a cart standby section 45 and a tray supply section 46. The cart transferring member 10 (not shown) is provided in an upper portion of the tray discharge device. The tray discharge device sequentially stores the medicine trays 18 with medicine contained therein in an empty delivery cart 47 (for more details, *see* WO/2005/105629).

### (1-3. MEDICINE DISCHARGE DEVICE)

As shown in FIG. 1, the medicine dispensing device 4 is configured to package corresponding medicines one pack at a time according to a prescription data inputted from a server and to dispense the same to the corresponding medicine tray 18 that is conveyed on the tray conveying line 3. A stopper (not shown) is provided below each medicine dispensing device 4 to temporarily stop the medicine tray 18 moving on the tray conveying line 3 when necessary.

### (1-4. CARD REWRITING DEVICE 5)

As shown in FIG. 1, the card rewriting device 5 is configured to print predetermined items on an identification card provided on the medicine tray 18. Although already printed, the card rewriting device can rewrite and reprint the contents (for more details, *see, e. g.*, Japanese Laid-Open Patent Publication No. 2002-165865).

### (1-5. STACK LIFTER 6)

The stack lifter 6 is configured to stack the medicine trays 18, which are conveyed thereto with the medicine contained therein, and to have them standby and then to sequentially supply the medicine tray to the tray discharge device (for more details, *see*, *e.g.,* Japanese Laid-Open Patent Publication No. 2002-240946).

### (1-6. CONTROL DEVICE 7)

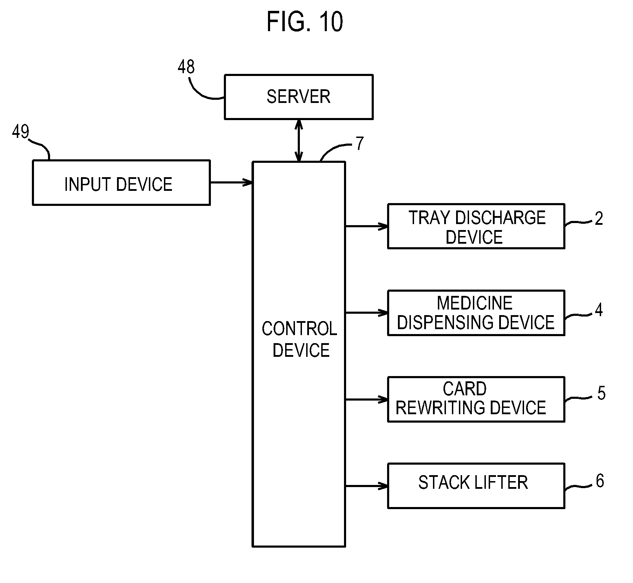

The control device 7, as shown in FIG. 10, controls the medicine dispensing device 4, each roller of the tray conveying line 3, the medicine tray discharge device 2, etc. based on the prescription data received from a server 48 or inputted by an input device 49 (for example, a keyboard, a mouse, a touch panel, etc.).

### (2. OPERATION)

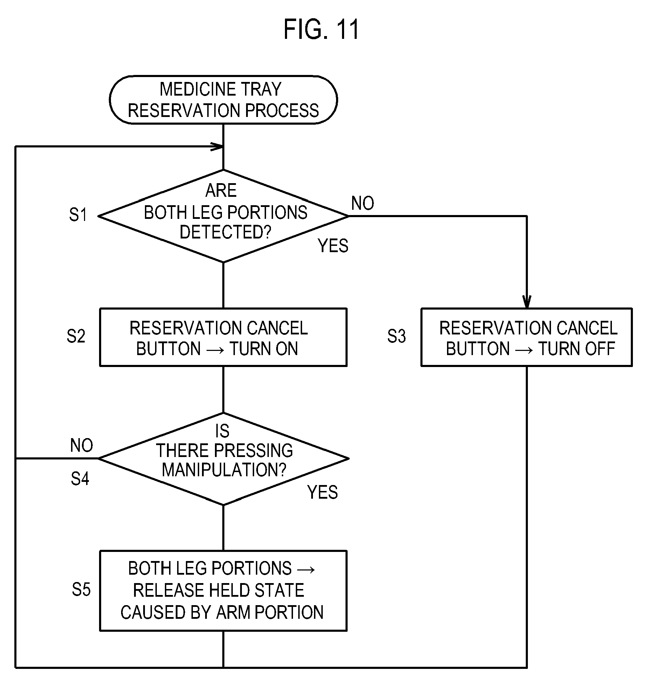

Next, operation of the medicine supply system having the above-described construction, specifically, operation of the medicine tray supply device 1 having the feature of the present invention will be described in accordance with flow charts shown in FIGS. 11 to 17.

The medicine tray supply device 1 performs a reservation process and a supply process for the medicine trays 18.

### (2-1. MEDICINE TRAY RESERVATION PROCESS)

In the medicine tray reservation process, it is determined whether the preparation cart 37 is set in the standby position (Step S1) as shown in FIG. 11. Such determination is made based on whether the two leg portions 38a of the preparation cart 37 are inserted to the communication grooves 16 of the bottom portion 12 of the device body 8 and the leg portions 38a are detected by a first leg portion detecting sensor (not shown) respectively. In the state where both leg portions 38a are detected by the first leg portion detecting sensor, the preparation cart 37 is held by the arm portion 32 and thus cannot be moved in the standby position. At this time, the reservation cancel button is put into a turn-on state (Step S2). In contrast, if both the leg portions 38a are not detected by the first leg portion detecting sensor, the reservation cancel button is turned off (Step S3). If the reservation cancel button is in the turn-on state, pressing manipulation is done (Step S4). Then, the slide arm 28 is advanced to an open position to thus release the held state of the preparation cart 37 caused by the arm portion 32 (Step S5). Further, setting the preparation cart 37 to the standby position can be always performed insofar as the preparation cart 37 is not set in the standby position.

### (2-2. MEDICINE TRAY SUPPLY PROCESS)

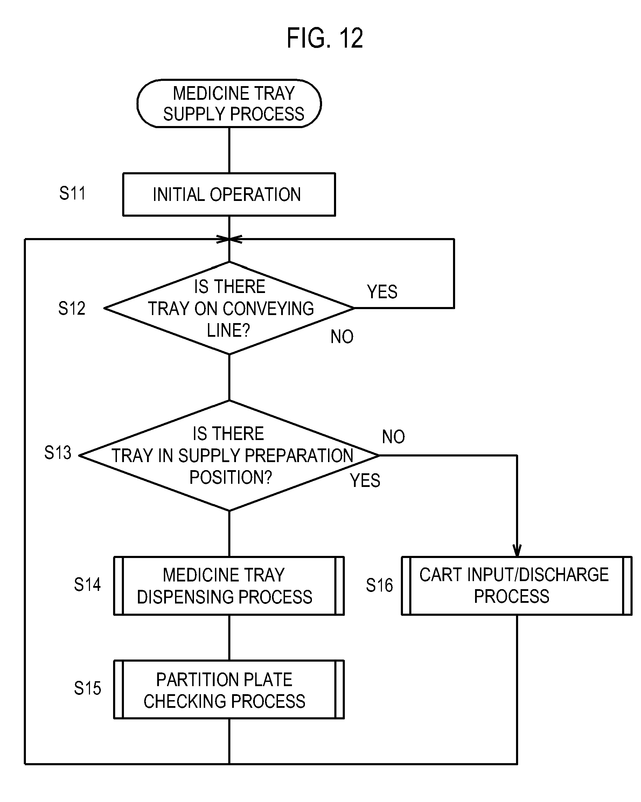

In the medicine tray supply process, as shown in the flow chart of FIG. 12, an initial operation (taking a starting point) is first performed (Step S11). Next, it is determined whether there is the medicine tray 18 on the tray conveying line 3 (Step S12). If there is no medicine tray 18 on the tray conveying line 3, it is determined whether the tray holding portion 40 holds the medicine tray 18 in the supply preparation position (Step S 13). If the medicine tray 18 is supported, then a medicine tray dispensing process is performed (Step S14), and then a partition plate checking process is performed (Step S15). In contrast, if the medicine tray is not supported, the cart input/discharge process is performed (Step S16).

### (2-2-1. INITIAL OPERATION)

In the initial operation, the group of medicine trays contained in the device body 8 is lifted to the supply preparation position. Further, as a motor operates, the slide arm 28 is advanced to an advance position shown in FIG. 6(a) along the slide rail 27. In this state, the arm portion 28 does not rotate and the third straight section 32c protrudes in the communication groove 16.

### (2-2-2. MEDICINE TRAY DISPENSING PROCESS)

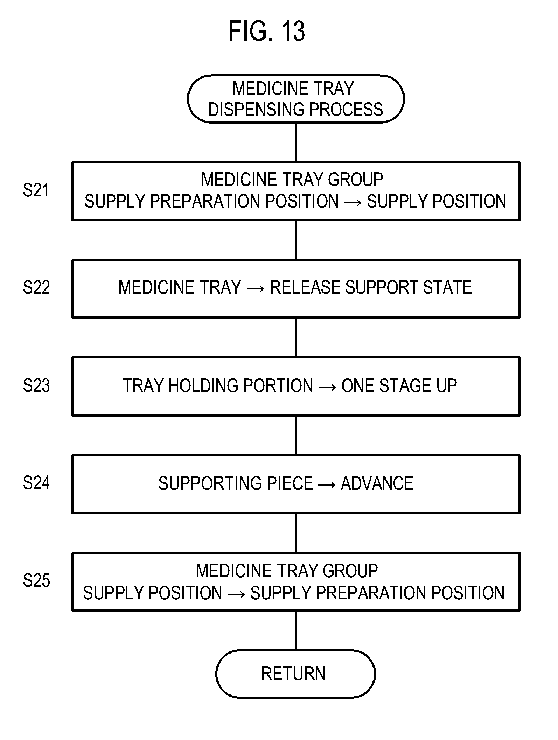

In the medicine tray dispensing process, as shown in FIG. 13, the tray lifting member 11 is driven, thereby lowering the tray holding portion 40 along the lifting shaft 39 and shifting the group of medicine trays from the supply preparation position to the supply position (Step S21). When the lowermost medicine tray 18 is placed on the transfer rollers of the tray conveying member 9, the supporting piece 41 is retracted to thereby release support for the flange portion 19 of the medicine tray 18 (Step S22). Thereafter, the tray holding portion 40 is moved to the medicine tray located up by one stage (Step S23) and then the supporting piece 41 is again advanced (Step S24). By lifting the tray holding portion 40 from such a state, only the medicine tray 18 in the lowermost position is left, while the group of remaining medicine trays located higher than the lowermost medicine tray is lifted to the supply preparation position (Step S25).

### (2-2-3. PARTITION PLATE CHECKING PROCESS)

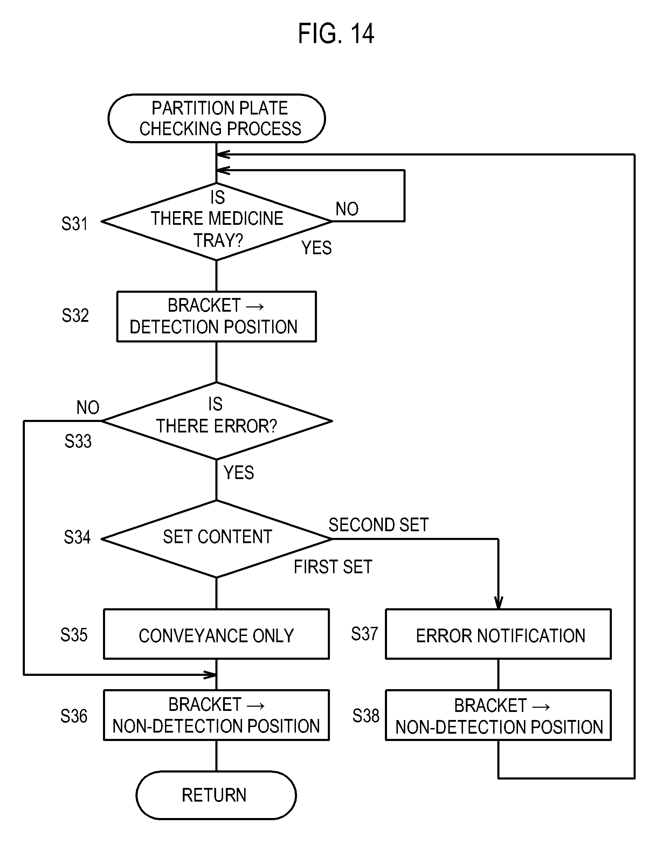

In the partition plate checking process, as shown in FIG. 14, it is determined whether the partition plates 20 are positioned in an appropriate position within the medicine tray 18 which is left on the bottom portion 12. That is, by means of a third tray detecting sensor (not shown), it is detected whether the medicine tray 18 is positioned on the first transfer portion 25 (Step S31). If the medicine tray 18 is positioned on the first transfer portion 25, a motor operates and thus the bracket 22 is rotated to the detection position (Step S32). Further, based on a detection signal of each of the partition plate detecting sensor 24 in the detection position, it is determined whether an error occurs (Step S33). In cases where the medicine tray 18 is not positioned in an appropriate position and the partition plate 20 is not positioned in an appropriate position (in case where extra partition plate is positioned, in case where the partition plate is positioned in a incorrect position), the side edge portion of the bracket 22 comes into contact with the partition plate and thus is prevented from further rotation. Thus, the partition plate detecting sensor 24 cannot detect the partition plate 20. In case where no partition plate 20 is positioned, or in case where there is any portion where the partition plate is not positioned, all or some of the partition plate detecting sensors 24 cannot detect the partition plate 20.

If it is determined that errors occur from the detection signal of the partition plate detecting sensor 24 as described above, an error process is performed as follows in accordance with a preset content. That is, a first set content or a second set content is determined (Step S34). If the first set content is determined, then the medicine tray 18 with the error occurrence is passed as it is without the subsequent medicine dispensing process in the medicine dispensing device 4 (Step S35). And, the bracket 22 of the partition plate detecting sensor 24 is rotated to its original non-detection position (Step S36). In contrast, if the second set method is determined, then the error is notified (Step S37). Based on such error notification, operators perform maintenance work such as change in the position of the partition plate 20. And, similar to the above, the bracket 22 of the partition plate detecting sensor 24 is rotated to the original position (Step S38). Thereafter, the process returns to Step S31 and the above-described processes are performed. Further, as for the determination on the first set content or the second set content, which is performed in Step S34, it may be stored by displaying and selecting a set screen on a monitor in advance and may be performed in accordance with a stored content.

### (2-2-4. CART INPUT/DISCHARGE PROCESS)

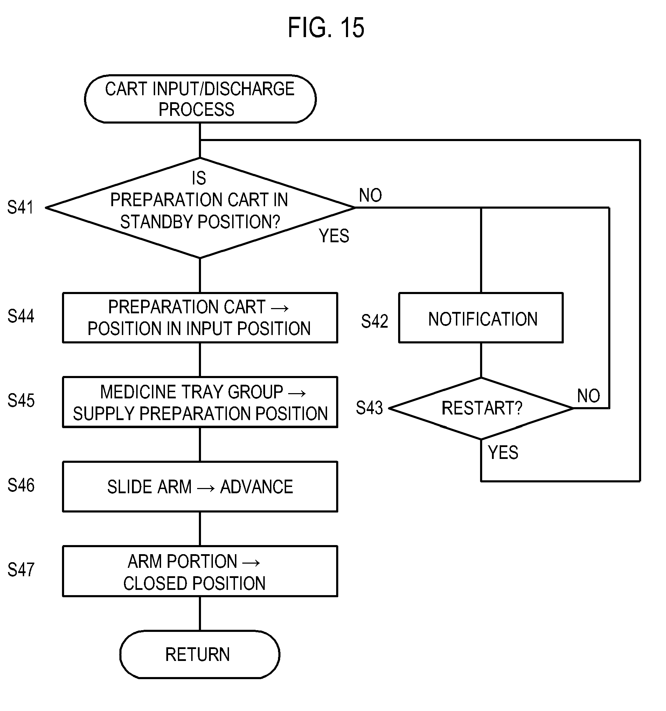

In the cart input/discharge process, as shown in FIG 15, it is determined whether the preparation cart 37 is set in the standby position (Step S41). Similar to the medicine tray reservation process, such determination is made based on whether the first leg portion detecting sensor (not shown) provided in the communication groove 16 of the bottom portion 12 of the device body 8 can detect the two leg portions 38a of the preparation cart 37.

If the preparation cart 37 is not set in the preparation position, then a notification purporting that the medicine trays 18 are out-of-stock is made by a buzzer, etc. (Step S42). Based on the notification, operators may stack the medicine tray 18 on the prepare cart 37 and set it in the preparation position. When the preparation cart 37 is set in the preparation position, the process is restarted by manipulating a set completion button (not shown) (Step S43). Then, the process returns to Step S42 and it is determined whether the preparation cart 37 is set in the standby position.

In contrast, if the preparation cart 37 is set in the preparation, then it is detected by the tray detecting sensor 15a whether the medicine trays 18 are stacked beyond the maximum number. If it is determined that the medicine trays 18 are stacked beyond the maximum number, then input from the tray conveying member 9 is hindered. Accordingly, excessive stack of the medicine trays 18 is prevented. Further, if the number of stacked medicine trays 18 is appropriate, then the slide arm 28 is retracted along the slide rail 27 by the operation of a motor and the preparation cart 37 is positioned in the input position (Step S44). And, the group of stacked medicine trays is held from the preparation cart 37 positioned in the input position by driving the tray holding portion 40 and is then lifted to the supply preparation position to be positioned therein (Step S45). Next, the slide arm 28 is further advanced from the advance position shown in FIG. 6(d) to the open position shown in FIG. 6(e) along the slide rail 27 by the operation of a motor, thereby shifting the preparation cart 37 from the input position to the standby position and then further to the front thereof (Step S46). Thus, the leg portion 38a of the preparation cart 37 is discharged from the communication groove 16. Thereafter, a second leg portion detecting sensor detects the leg portion 38a of the preparation cart 37. If not detected, the motor operates reversely and the slide arm 28 is retracted and the arm portion 32 is rotated to the closed position (Step S47).

Further, when the preparation cart 37 is further transferred to the front of the standby position, the held state caused by the arm portion 32 may be maintained. This is preferable in that the preparation cart 37 is separated from the device body 8 and therefore other works are not disturbed.

Moreover, in the foregoing embodiment, the group of the medicine trays is supported in a tray preparation position as the medicine trays are stacked, and the lowermost tray in the medicine trays are sequentially dispensed to the tray conveying line 3. However, the group of stacked medicine trays may be supported in another position and the medicine trays are sequentially transferred by means of a conveyer belt to a detection position associated with the partition plate detecting sensor 24.

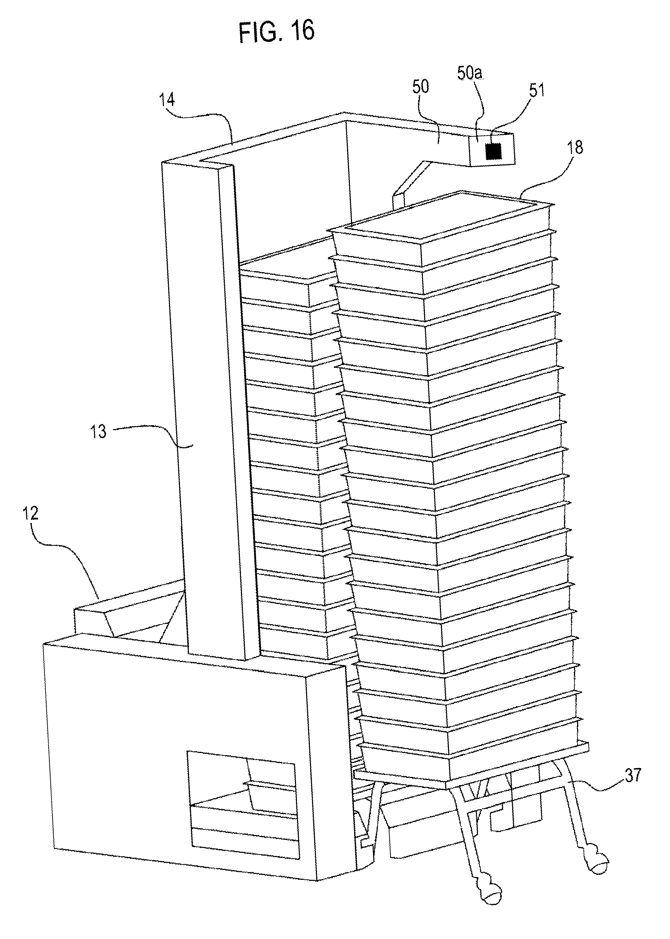

Additionally, in the foregoing embodiment, the device body 8 includes the bottom portion 12, the side portions 13 protruding forward from both sides thereof, the back portion 14, and the top plate portion 15 protruding from the upper end of the back portion 14 further than the side portion 13. However, the device body may be preferably constructed as shown in FIG. 16.

That is, in FIG. 16, the top plate portion 15 is unnecessary and an arm portion 50 horizontally extends from the upper end of one of the side portions 13. The arm portion 50 is formed on its leading end with an inclined surface 50a that is inclined towards the medicine trays 18 stacked on the preparation cart 37 set in the preparation position. A noncontact type sensor 51 is provided in the inclined surface. The sensor 51 is configured to detect the medicine tray when the medicine trays 18 are stacked to a predetermined height on the preparation cart 37 set in the preparation position. A proximity sensor other than an optical sensor consisting of a light emitting element and a light receiving element may be used as the sensor 51. The optical sensor detects that the medicine trays are stacked on the preparation cart 37 up to the predetermined height, when the light from the light emitting element is reflected on the medicine tray 18 and then received by the light receiving element. As for the proximity sensor, a small piece made from a magnetic material may be integrated in the medicine tray 18.

According to the device body 8 constructed as described above, similar to the foregoing embodiment, the medicine trays 18 stacked beyond the maximum number can be detected in a state where the preparation cart 37 with the medicine trays 18 stacked thereon is set in the standby position. Further, by hindering input from the tray conveying member 9, excessive stack of the medicine trays 18 can be prevented. Further, since the top plate portion 15 is removed, there is no portion with which the medicine trays 18 collide even when the preparation cart 37 is transferred from the preparation position to the input position under failure of the sensor 51.

### Description of reference numerals

- 1: Medicine Tray Supply Device
- 2: Medicine Tray Discharge Device
- 3: Tray Conveying Line
- 4: Medicine Dispensing Device
- 5: Card Rewriting Device
- 6: Stack Lifter
- 7: Control Device (Control Means)
- 8: Device Body
- 9: Tray Conveying Member
- 10: Cart Transferring Member (Cart Transferring Means)
- 11: Tray Lifting Member
- 12: Bottom Portion
- 13: Side Portion
- 14: Back Portion
- 15: Top Plate Portion
- 16: Communication Groove
- 17: Partition Plate Detecting Part
- 18: Medicine Tray
- 19: Flange Portion
- 20: Partition Plate
- 21: Drive Shaft
- 22: Bracket
- 23: Abutment Plate
- 24: Partition Plate Detecting Sensor
- 25: First Transfer Portion
- 26: Second Transfer Portion
- 27: Slide Rail
- 28: Slide Arm (Cart Positioning Means)
- 29: Bulging Portion
- 30: Arm Body
- 31: Spindle
- 32: Arm Portion (Engaging portion)
- 33: coil Spring
- 34: First Attachment Part
- 35: Second Attachment Part
- 36: Shaft
- 37: Preparation Cart
- 38a: Leg Portion (Engaged portion)
- 39: Lifting Shaft
- 40: Tray Holding Portion
- 41: Supporting Piece
- 42: Pinion Gear
- 43: Connecting Shaft
- 44: Rack Gear
- 45: Cart Standby Section
- 46: Tray Supply Section
- 47: Transfer Cart
- 48: Server
- 49: Input Device
- 50: Arm Portion
- 51: Sensor

## Claims

1. A medicine tray supply device for supplying medicine trays to a tray conveying line, comprising:
a preparation cart for supporting a group of medicine trays comprising vertically stacked medicine trays;
cart positioning means for positioning the preparation cart in a standby position;
cart transferring means for transferring the preparation cart positioned in the standby position to an input position and for transferring the preparation cart positioned in the input position to a discharge position;
tray supply means for holding the group of medicine trays from the preparation cart transferred to the input position and moving the group of medicine trays to a supply preparation position, and supplying a lowermost medicine tray from the group of medicine trays in the supply preparation position to the tray conveying line; and
control means for transferring the preparation cart from the input position to the standby position by the cart transferring means.

2. The medicine tray supply device of Claim 1, wherein the control means supplies the medicine tray to the tray conveying line by the tray supply means after transferring the preparation cart from the input position to the standby position by the cart transferring means.

3. The medicine tray supply device of Claim 1 or 2, wherein the control means transfers the preparation cart positioned in the standby position to the input position by the cart transferring means after all of the medicine trays held in the supply preparation position are supplied to the tray conveying line.

4. The medicine tray supply device of any one of Claims 1 to 3, wherein the preparation cart includes engaged portions in at least two places,
wherein the cart positioning means includes an engaging portion engaging and disengaging from the two engaged portions of the preparation cart, and
wherein the cart transferring means reciprocates the preparation cart between the standby position and the input position by moving the engaging portion.

5. The medicine tray supply device of Claim 4, wherein the positioning means maintains an engagement of the engaged portion caused by the engaging portion after the cart transferring means moves the preparation cart from the input position to the discharge position beyond the standby position.

6. The medicine tray supply device of Claim 4 or 5, wherein the positioning means releases the engagement of the engaged portion caused by the engaging portion when the preparation cart is positioned in the standby position.

7. The medicine tray supply device of any one of Claims 1 to 6, wherein the tray lifting means includes a tray holding portion that is lifted and lowered along lifting shafts disposed at both sides along an input direction of the preparation cart,
wherein the tray holding portion includes a connecting shaft having pinion gears engaging each of the lifting shaft at both ends thereof, and
wherein rack gears engaging the pinion gears respectively are disposed along the lifting shaft.

8. The medicine tray supply device of any one of Claims 1 to 7, further comprising tray detecting means for detecting that the group of medicine trays placed on the preparation cart positioned in the standby position comprises the medicine trays stacked beyond a maximum stack number permitting lifting and lowering by the tray lifting means,
wherein the control means notifies an error when the tray detecting means detects that the medicine trays are stacked beyond the maximum stack number.

9. The medicine tray supply device of any one of Claims 1 to 8, wherein the medicine tray includes partition plates to partition an inside thereof into a plurality of receiving sections, and
wherein the medicine tray supply device further comprises an error detecting means for detecting an error of medicine tray as to whether the partition plates are set in a predetermined position, or as to whether the medicine tray is positioned in a normal position.

10. The medicine tray supply device of Claim 9, wherein the error detecting means includes a bracket rotatably provided around a drive shaft between a detection position and a non-detection position, and
wherein the error detecting means further includes biasing means for biasing the bracket toward the detection position and rotation preventing means for preventing the bracket biased by the biasing means from rotating beyond the detection position.

11. The medicine tray supply device of Claim 9 or 10, further comprising notification means for notifying a notification purporting that the error of medicine tray is detected when the error detecting means detects the error of medicine tray.

12. The medicine tray supply device of any one of Claims 9 to 11, wherein when the error detecting means detects the error of medicine tray the control means does not perform a subsequent process for the medicine tray.
